# EUROPEAN PATENT SPECIFICATION

(11) **EP 2 858 792 B1**
(45) Date of publication and mention of the grant of the patent: **17.10.2018**
(21) Application number: 13728734.8
(22) Date of filing: 12.06.2013
(51) Int. Cl.: B25J 15/00, B25J 15/12, B65B 21/12, B65B 21/18, B65G 47/90

(54) **BOTTLE GRIPPER AND BOTTLE GRIPPER HOLDER**
FLASCHENGREIFER UND FLASCHENGREIFERGEHÄUSE
PREHENSEUR DE BOUTEILLE ET SON SUPPORT

(30) Priority: 12.06.2012 SE 1250610
(43) Date of publication of application: 15.04.2015
(73) Proprietor: Yaskawa Nordic AB, 385 25 Torsås (SE)
(72) Inventor: TRYGG, Lars Erik, S-374 24 Karlshamn (SE)
(74) Representative: AWA Sweden AB
(86) International application number: PCT/EP2013/062189
(87) International publication number: WO 2013/186280

(56) References cited:
- EP-A1- 0 680 901
- WO-A1-95/01908
- DE-U1- 9 014 296
- DE-U1-202007 001 944
- US-A- 3 554 594

## Description

### Field of the Invention

The invention relates to a bottle gripper comprising a substantially cylindrical housing and an elastic sleeve, which is arranged in the housing and adapted to be deformed radially inwards when a pressure fluid is introduced into a space between the housing and the sleeve. The bottle gripper is suitable for use in bottle-handling equipment, for example of the kind that comprises an industrial robot for simultaneously transporting groups of bottles in breweries and the like. The invention also relates to a bottle griper holder comprising such a bottle gripper.

### Background Art

In breweries, for example, large amounts of bottles are handled during filling, packing and preparing of returnable bottles. The bottles may be of glass or other materials and, lately, the use of what is known as PET bottles have in- creased. To handle the bottles in a rational manner use is often made of automatic handling equipment, which may involve industrial robots.

It is common when lifting, transporting and positioning the bottles to use pneumatic bottle grippers, which each is designed to grip an individual bottle. Usually, the bottle grippers are arranged as fixed or transformable matrices in special gripper holders that may be attached to the nose of an industrial robot or any other handling equipment. With the aid of such bottle grippers arranged in groups a predetermined number of bottles, corresponding for example to the number of bottle compartments in a bottle crate for transporting and storing the bottles, can be handled simultaneously by a robot or other equipment. The handling may, for example, comprise gripping and lifting the predetermined number of bottles from a conveyor belt, regrouping the bottles to position them relatively to each other in a manner that corresponds to the design of the crate, depositing the bottles in the crate and releasing the grip of the bottles.

The invention concerns a bottle gripper of the kind that is arranged to grip individual bottles.

DE 28 45 094 discloses a prior-art gripper for rotationally symmetric parts. The gripper comprises a housing with an internal annular recess. An elastic diaphragm is sealingly attached to the housing by means of clamping screws, such that the diaphragm covers the recess. The housing is provided with a channel through which a pressure fluid can be supplied to the recess. By supplying a pressure fluid to the recess a reduction of the inner diameter of the diaphragm is achieved, which reduction can be used for gripping about a rotationally symmetric part that is introduced in the housing.

EP 0 083 589 B1 discloses a bottle-gripping device comprising a support sleeve (housing), a muff (sleeve) of elastic material and air passages for supplying compressed air to a space between the support sleeve and the rubber muff for providing deformation of the muff. This gripping device can be used for gripping, through deformation of the diaphragm, a bottle head that is introduced in the support sleeve. The document further discloses a holder for a plurality of such gripping devices.

DE 20 2007 001944 U1 discloses a bottle gripper comprising a housing with a resiliently deformable insert inside. The insert comprises a couple of fingers adapted to grasp a bottle head when the insert is deformed. On top of the insert there is a piston, which is displaceable towards the insert in order to cause deformation thereof.

EP 0 680 901 A1 discloses a bottle gripper comprising a couple of fingers having barbs at their tips. The barbs are intended to grip a bottle head below a circumferential rim thereof. The fingers are controlled by means of a sleeve radially enclosing them and moving them by means of a jacket pressurized by air.

Gripping devices known in the art allow, for example, rapid gripping and releasing of bottle heads.

The constant increase in the rate of production at, for example, breweries has made it necessary to increase the speed at which empty as well as filled bot- ties are being handled. Recent developments in the field of industrial robots and other equipment that are adapted to carry the bottle-grippers have made it possible to move the grippers and the bottles at very high speeds and under exposure to extremely high levels of acceleration and deceleration. Further, technical progress has paved the way for a more frequent use of bottles of increasingly large volume and, thus, weight. For example, an increasingly large proportion of the total distribution and sales of soft drinks now consists of 0,5 litre, 1,5 litre or 2,0 litre PET bottles as compared with the previously used 33 cl bottles. The combination of increasing bottle weights exposed to higher and higher accelerations and decelerations means that increasing demands are placed on the bottle grippers used. In particular in the case of acceleration and retardation of the bottles, the large moments of inertia of the bottles generate great stresses, especially in the form of large torque moments at the mutually engaging contact surfaces of the bottles and the grip- pers. In this context, also the increasingly large distances, in modern bottles, from the bottle head to the centre of gravity of the bottle contribute to a further increase of the torque moment of the gripper. With an arrangement according to the above mentioned EP 0 083 589 B1 it has been possible to satisfactory handle also such larger PET bottles, at very high speeds and with great accelerations and retardations.

More recently however, as a result of a desire to reduce the consumption of material in the manufacture of PET bottles the axial length of the opening portion of the bottle at which the screw cap is applied has been shortened. As a result, the axial length or height of the screw cap of the bottle has also been reduced. This means that the length of the bottle head that can be used by the bottle grippers for gripping and holding the bottles has become smaller. For example, the grippable axial height of the screw cap of a PET bottle frequently used for soft drinks has been reduced from approx. 15,5 to approx. 12,5 mm. At standardized screw caps having an outer diameter of approx. 30,5 mm, this means that the grippable outer surface of the standardized screw cap has been reduced by as much as approx. 20 %.

This considerable reduction of the grippable surface has caused considerable problems related to the phenomena described above that appear at high handling speeds and large bottle volumes. In particular in the case of large bottles, such as 1,5 and 2,0 litre PET bottles provided with screw caps of the reduced height, the great stresses have caused serious problems. The stress generated in the horizontal direction due to accelerations and decelerations as well as the vertical stress caused by gravity further causes the reduced grippable surface of the bottle head to be insufficient to ensure a secure and stable grip about the bottle. These problems have in turn led to a situation in which the new bottles cannot be handled at the high speeds at which the previously used longer bottle heads and screw caps have been handled.

Furthermore, as a result of the development of modern PET bottles the previously frequently occurring relatively long, curved neck portions of the bottles disappear or are considerably reduced in length. This is explained by the fact that, as the amount of material is reduced, stretching of the PET material is increasingly required to provide a gas-tight bottle. Since curved bottle portions, such as neck portions, are not subjected to the same degree of stretching of the material as straight portions during manufacture of the bottles the previously frequently occurring long neck portions do not occur in modern bottles. The lack of long neck portions of this kind in modern bottles has made it even more difficult for the prior-art bottle grippers to reach and, in a secure and stable manner, grip and retain modern PET bottles.

A further aspect concerning the development of modern PET bottles, especially the ones used for soft drinks and containing volumes of between 0,5 and 2,5 litre, is that the shape of the bottles used for different drinks vary to a great extent. E.g. the shape of the bottle neck may be elongated and slender for some drinks, while short and greatly curved for other drinks. In fact, the shape of the bottles are more and more used by the breweries to identify for the customers which drink is contained in the respective type of bottle. This means that it has been increasingly difficult to utilize grippers which are arranged to grip the neck portion of the bottles. Such gripping around the neck portion may on the one hand increase the stability and firmness of the grip, but on the other hand it requires that the grippers need to be especially designed for each shape of the bottles that are to be handled. With the neck gripping arrangements it is thus necessary both to design and manufacture several different grippers and to change the grippers in the production and handling lines when different types of drinks and bottles are to be treated.

### Brief Description of the Invention

It is therefore an object of the invention to provide an improved bottle grip- per of the kind mentioned by way of introduction.

A further object is to provide such a bottle gripper by means of which it is possible to achieve a steady and stable grip around the bottle head of a bottle, even when the grippable surface of the bottle head is relatively small.

Another object is to provide such a bottle gripper by means of which it is possible to move also relatively heavy and/ or tall bottles at relatively high speeds and under exposure to high accelerations and decelerations.

Yet another object is to provide such a bottle gripper which is of a simple design and is reliable.

A further object is to provide such a bottle gripper that can be used in already existing bottle-gripper holders without any or with only minor modifications thereof.

These and other objects are obtained by means of a bottle gripper which is of the kind stated in claim 1. The bottle gripper according to the invention comprises a substantially cylindrical housing and an elastic sleeve, which is arranged in the housing and adapted to be deformed radially inwards when a pressure fluid is introduced into a space between the housing and the sleeve. The bottle gripper further comprises an insert which is insertable in the housing and the sleeve, which insert comprises an annular base portion and a number of fingers which extend axially from the base portion and are radially flexible.

Owing to this insert, which is insertable in the housing and provided with axial fingers, it is possible to use a relatively rigid material to form the surfaces of the bottle gripper that, in contact with the bottle head, are to ensure a secure and stable retaining engagement. In this way, unlike the elastic rubber material which in the prior-art grippers provided the contact surface between the gripper and the bottle, a number of advantages are obtained. For one thing the higher stiffness of the material of the insert allows the extension of the contact surfaces that are to come into contact with the bottle head to be defined with greater precision. In prior art, the elastic diaphragm moulds itself about the bottle head and the contact surface obtained will depend largely on the shape of the bottle head and the pressure exerted by the pressure fluid on the diaphragm. Moreover, using a relatively rigid material makes it possible to achieve a relatively non-resilient contact between the fingers and the bottle head. As a result, the degree to which the bottles can be rotated relative to the bottle gripper is considerably limited due to the moment of inertia that occurs during acceleration and deceleration. The reduced relative movement between the bottle and the gripper as well as the stiffer contact material per se both contribute to less wear to the contact surfaces of the bottle gripper. In addition, the possibility of utilizing a more rigid contact surface material also means that, at one and the same pressure exerted by the pressure fluid, the bottle can be retained by greater force, which reduces the risk of the bottles coming loose and, thus, causing production troubles or other damage to adjacent equipment or people in the proximity.

A further advantage of the inventive insert is that a firm, secure and reliable gripping, also of large and heavy bottles, may be achieved by gripping solely the screw cap of the bottle. Since the screw caps used for many frequently used bottles is standardized or at least vary only to a small degree in shape, it is possible to use one and the same gripper and insert irrespective of the shape, such as the neck curvature, of the bottles to be handled. Hereby only one or a few types of gripers and inserts need to be manufactured and kept in stock. Additionally, this entails for that bottles with varying dimensions and shapes may be handled in one and the same production line, without any need for changing the grippers.

Each of at least three of said fingers, and preferably all fingers, comprises a radially external sleeve contact surface for contacting the sleeve and a radially internal bottle contact surface for contacting a bottle head received in the housing. In this way, the clamping force of the sleeve can be transferred in a simple and effective manner directly from the sleeve via the fingers of the insert to the bottle head.

The bottle contact surfaces suitably define a minimum inner diameter of the fingers. As a result, the introduction of a bottle head in the gripper is facilitated at the same time as a retaining grip about the bottle head can be achieved by a relatively small radial movement of the fingers.

On their radial inner sides the fingers can comprise radially outwardly bulging bottle collar portions, which are arranged axially beyond the bottle contact surfaces as seen from the base and adapted to receive a bottle collar when the bottle contact surfaces are in contact with a bottle head. This makes it possible for the bottle gripper to grip and handle, in a simple and functional manner, also bottles which are provided with collars that project radially outside the cap or other portions arranged adjacent the bottle head and gripped by the bottle contact surfaces.

Such bottle collar portions suitably comprise a radially inwardly projecting securing portion, which is adapted to extend radially within the radial circumference of a bottle collar when the bottle contact surfaces are in contact with the bottle head. As a result, additional security is provided which prevents a bottle that for some reason has come loose from the grip of the bottle contact surfaces to drop from the bottle gripper.

The bottle collar portions are arranged to receive a bottle collar without contacting said bottle collar. By this means it is assured that the entire gripping force applied to the fingers is concentrated to the gripping contact between the bottle contact surfaces and the bottle head. Additionally, this reduces the tolerances by which the fingers and thereby the entire insert needs to be manufactured.

Conveniently, the sleeve contact surfaces provided on the fingers bulge radially inwards. This enables the shape of the fingers to be adapted to the shape of the sleeve, when the latter is deformed by pressure, so that the formation of a relatively large contact surface between the sleeve and the insert helps transferring the retention force from the pressure fluid to the fingers.

Suitably, the bottle contact surfaces are arranged axially overlapping the sleeve contact surfaces. In this way, the force of the pressure fluid is transferred to the bottle head to a high degree during compression of the insert material and to a lower degree during bending of said material. This prevents material fatigue and it also prevents the material from bending to such an extent that it reaches its yield point or ultimate tensile strength.

The annular base portion suitably has a cylindrical portion for introducing in the housing and the sleeve as well as a flange which protrudes radially from the cylindrical portion. This serves to prevent, in a simple and effective manner, the insert from coming loose from the housing and the sleeve. Conveniently, the insert is made of a relatively rigid and resilient material, such as polyester or POM.

The fingers are preferably arranged such that the bottle contact surfaces define a conical shape tapering towards the base portion when the fingers are relaxed. When a pressurized fluid is introduced and the fingers are flexed inwardly to contact the bottle head, the bottle contact surfaces then define an inner cylindrical surface, which corresponds to the outer cylindrical shape of the bottle head. This arrangement facilitates the introduction of a bottle head in the relaxed state of the gripper and ensures a steady and secure grip of the bottle head when the gripper is pressurized.

The base portion may comprise a planar end surface which is arranged to be supported by a corresponding planar surface of a bottle gripper holder, when the bottle contact surfaces are contacting a bottle head. By this means the insert is rigidly held in the holder during gripping of a bottle head. Especially, the mutual contact between the planar surfaces effectively prevents the insert and thereby the entire bottle to be pivoted around any axis which is perpendicular to the axial direction of the insert. The bottles will thus be maintained in the vertical orientation, which is the normal orientation during movement of the bottles, also during great accelerations and retardations of the movement.

Preferably, the bottle contact surfaces are concave along the axial direction of the insert. Some screw caps for PET bottles have, in addition to being circularly curved in the circumferential direction, a slightly convex circumferential surface along the height. In order to achieve a firm and reliable grip of such screw caps, it is desirable to form the bottle contact surfaces with a corresponding convex shape along the axial direction of the insert. By this means it is assured that the bottle contact surfaces will come into contact with the screw cap along the entire grippable height of such convex caps. Additionally, such concave bottle contact surfaces will for many applications, achieve a satisfactory grip of cylindrically shaped caps. In such a case it is assured that the bottle contact surface comes into contact with the cylindrical cap at both an upper and a lower portion of the cap. By this means the so distributed contact between the bottle contact surfaces and the cap will be able to withstand comparatively high torques about axes that are perpendicular to the axial direction of the insert.

In addition to being concave along the axial direction of the insert, the bottle contact surfaces are preferably curved in the circumferential directions such that the curvature corresponds to the radius of standardized screw caps. For standardized screw caps with a diameter of approx. 30,5 mm, the radius of the circumferential curvature should preferably be approx. 15,2 mm.

The bottle contact surfaces may be arranged to grip the outer surface of a standardized screw cap of a 0,5, 1,5, 2,0 or 2,5 liter PET bottle. By this means a reliable and secure gripping of the frequently used comparatively large and heavy PET bottles used e.g. for soft drinks is achieved. These bottles have previously proven to be particularly difficult to handle with the high speeds, great accelerations and retardations that are required in modern breweries.

The invention also concerns a bottle gripper holder, which comprises at least one block and at least one bottle gripper received in a respective opening of said block.

At such a bottle gripper holder, the base portion of the insert may comprise a planar end surface which is supported by a corresponding planar surface of the bottle gripper holder, at least when a pressurized fluid has been introduced into the space between the housing and the sleeve. This also enhances that the insert is rigidly held in the holder during gripping of a bottle head.

The bottle gripper may be received in the respective opening of the block with an axial play, and the insert may be arranged for axial displacement. The planar end surface of the base portion is then pressed against the corresponding planar surface of the bottle gripper holder when a pressurized fluid is introduced into the space between the housing and the sleeve. By this means the block and the bottle gripper may be manufactured with comparatively low tolerances while still providing a rigid supporting contact between the base portions planar end surface and the corresponding planar surface of the holder during gripping and movement of the bottle.

Further objects and advantages of the bottle gripper according to the invention will be evident from the following detailed description of embodiments and from the appended claims.

### Brief Description of the Drawings

An exemplifying embodiment of the invention will be described in more de- tail below, reference being made to the appended drawings, on which
Fig. 1 is a partly cut-out schematic perspective view of a number of bottle grippers according to an embodiment of the invention, which bottle grippers are arranged in a bottle gripper holder and serve to grip and lift a corresponding number of bottles from a bottle crate;
Figs. 2a and 2b are cross-sections through one of the bottle grippers shown in fig. 1 and show the bottle gripper in an inactive and an active state, respectively;
Fig. 3 is an exploded perspective view which shows certain parts of one of the bottle grippers shown in fig. 1;
Fig. 4 is a partly cut-out perspective view of one of the bottle grippers of fig. 1 and shows said bottle gripper in an active state embracing a bottle.
Fig. 5 is a partly cut-out schematic perspective view similar to fig. 1 illustrating a number of bottle grippers which are arranged in a different bottle gripper holder and a corresponding number of bottles.
Figs. 6a, and 6b are cross-sections corresponding to figs. 2a and 2b illustrating a bottle, the bottle gripper and the bottle gripper holder shown in fig. 5.
Figs. 7a and 7b are cross-sections in enlarged scale of the arrangement shown in figs. 6a and 6b, which illustrates the bottle gripper in an inactive and an active state respectively when a bottle has been introduced.

### Detailed Description of Embodiments

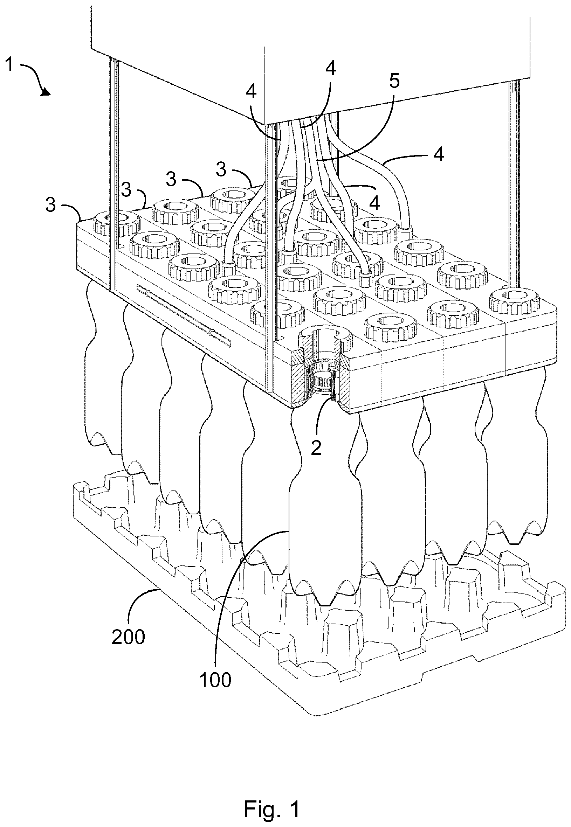

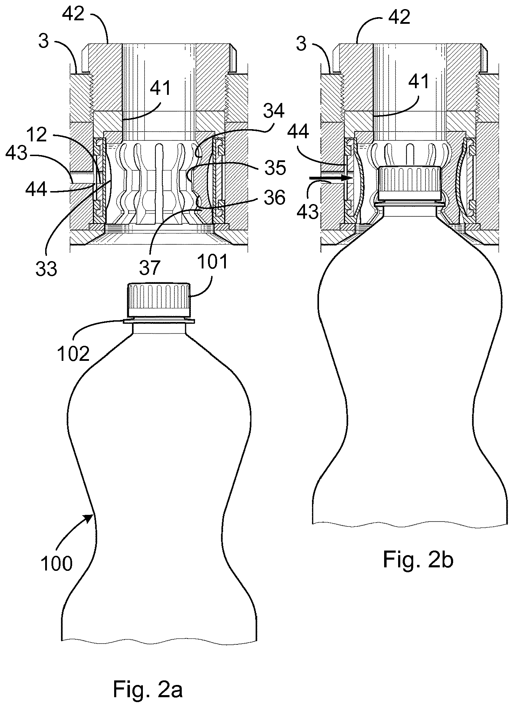

Fig. 1 illustrates schematically a holder 1 on which 24 bottle grippers 2 according to a first embodiment of the invention are arranged. The figures also illustrate a number of bottles 100 and a crate 200 for transporting and storing 24 bottles. The bottles 100 are PET bottles able to contain 1,5 litres of liquid and having bottle heads comprising a standardized screw cap 101 and a bottle collar 102 (see fig. 2a) with standardized shapes and dimensions. These bottles are well known and frequently used for storing, transporting and selling soft drinks. In the shown examples the standardized screw cap has a generally cylindrical circumferential surface with a diameter of approx. 30,5 mm and a grippable height of approx. 12,5 mm. In the shown examples, the frequently used tear strip has been omitted for increased clarity.

The bottle grippers 2 are arranged in a matrix comprising four columns, each having six rows of bottle grippers 2. Each column is defined by what is referred to as a block 3, each block having six rectilinearly arranged through openings, which each receives an associated bottle gripper 2. A pressure fluid for maneuvering the bottle grippers 2 is supplied to each of the blocks 3 via a respective first tube 4. In the example shown there is also provided two other tubes 5 connected to one of the blocks for supplying a pressure fluid so as to enable mutual displacement of the blocks 3. In the example shown, air is used as pressure fluid for maneuvering the bottle grippers and for moving the blocks 3 relative to each other. The holder and the blocks are of the kind disclosed in EP 0 083 599 B1, which document is incorporated herein by reference.

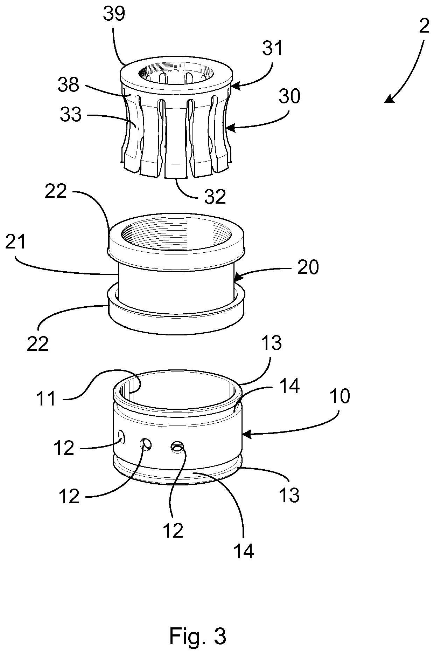

With reference to figs. 2a, 2b, 3 and 4, the exemplifying bottle gripper 2 illustrated in the figures will be described below. The bottle gripper 2 comprises a housing 10, an elastic sleeve 20 and an insert 30.

The housing 10 is substantially cylindrical and has a cylindrical bore 11 and three through holes 12 provided in the cylinder wall for introducing the pressure fluid. On the outside the housing 10 has at both ends a radially outwardly protruding flange 13 which extend around the whole circumference of the housing. A radially inwardly formed groove 14 is provided axially between the two flanges 13 and adjacent an associated one of said flanges. The two grooves 14 extend around the whole circumference of the housing. The housing is made of a rigid polymer material, which in the example shown consists of PP (polypropylene).

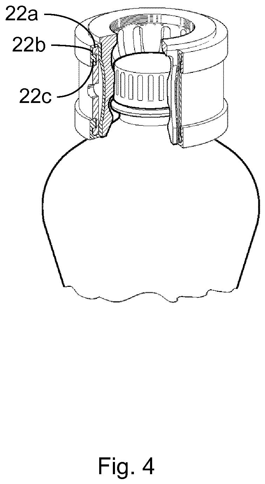

The elastic sleeve 20 has in its non-deformed state a substantially cylindrical portion 21. A fold-over collar 22 which projects radially from the cylindrical portion is arranged at both ends of the cylindrical portion 21. As is shown clearly in fig. 4, each fold-over collar 22 comprises a wall portion 22a which projects radially outwards, a wall portion 22b which projects axially, in the direction of the opposing fold-over collar, from the wall portion 22a and a flange 22c which projects radially inwards from the wall portion 22b. The sleeve 20 is formed from a flexible diaphragm, which is substantially impermeable to the pressure fluid in question. In the example shown, the sleeve 20 is formed from a special rubber material.

The sleeve 20 is sealingly fixed to the housing 10 by the cylindrical portion 21 being received in the bore 11 of the housing and the two fold-over collars 22 being pulled over the respective ends of the housing 10, such that the wall portions 22a, 22b and the flange 22c enclose the respective flange 13 of the sleeve 10 and the flange 22c is received in the respective groove 14. To further ensure a tight fit between the sleeve 20 and the housing 10, the wall portion 22a can be pressed against the respective axial end surface of the flange 13 by means of a clamping ring 41 which is supported by a plug 42 (see figs. 2a and 2b) that is threadingly received in the block 3.

As shown in figs. 2a, 2b, pressure fluid channels 43 are arranged in the blocks 3. The pressure fluid channels 43 connect the first tubes 4 with the through holes for receiving the bottle grippers 2 in each block 3. When the housing 10 of a gripper 2, with the sleeve 20 mounted therein, is arranged in a through opening the mouth of the pressure fluid channel 43 will be situated between the fold-over collars 22 of the sleeve, which fold-over collars 22 abut in a sealing manner against the cylindrical boundary wall of the through opening. In this way, an annular space 44 sealed from the surroundings is formed be- tween the housing 10 and the cylindrical boundary wall of the through opening. This space 44 is connected via the holes 12 with the inner bore 11 of the housing and the outside of the cylindrical portion 21 of the sleeve 20. By supplying and pressurizing a pressure fluid, such as air, via the first tubes 4, the pressure fluid channels 43, the spaces 44 and the holes 12, it is thus possible to cause the cylindrical portion 21 of the sleeve 20 to be elastically deformed in such a manner that it bulges radially inwards as shown in fig. 2b. When the pressure of the pressure fluid is relieved, the portion 21 resumes, due to its elasticity, its substantially cylindrical shape, as shown in fig. 2a.

The bottle gripper according to the invention further comprises an insert 30. The insert 30 comprises an annular base portion 31 and a number of fingers 32 which extend axially from the base portion 31. The annular base portion 31 comprises a planar end surface which faces away from the fingers 32. In the example shown, the insert has 12 mutually similar fingers which are uniformly spaced about the insert 30. The exemplifying embodiment with precisely 12 fingers has proved advantageous since it makes it possible, in already existing housings and sleeves, to utilize a pressure of the pressure fluid of around 2 bars to provide a steady and stable engagement between the fingers of the insert and the bottle head. In this way, the same pressure can be utilized in the bottle gripper provided with a finger insert as is utilized when the same gripper is used without an insert. The insert is made of a resilient and relatively rigid material. In the example shown, the insert is made of polyester. However, it is possible to form the insert from other appropriate materials, such as POM (polyoxymethylene).

Each finger has on its radially outwardly facing side a sleeve contact surface 33 bent radially inwards. Each finger has on its radially inwardly facing side, adjacent to the base portion 31, a surface 34 bent radially outwards. A bottle contact surface 35 is provided in a position axially beyond the surface 34, as seen from the base portion 31. The bottle contact surfaces 35 define a minimum inner diameter of the insert. The bottle contact surfaces 35 are arranged just opposite, i.e. at the same axial height as, the sleeve contact surfaces 33. As a result, the force that is transferred from the pressurized pressure fluid via the sleeve and the insert to the bottle head will to a greater extent cause compression rather than bending of the material of the insert. This is advantageous in that it implies a reduced risk of insert material fatigue. Each finger further has, axially beyond the bottle contact surface 35, as seen from the base portion 31, a radially outwardly bent bottle collar portion 36 arranged to receive a bottle collar 102 when the bottle contact surfaces 35 are in contact with a bottle head 101. The bottle collar portion 36 of each finger 32 comprises a radially inwardly projecting securing portion 37 which is adapted to extend radially within the radial circumference of a bottle collar 102 when the bottle contact surfaces 35 are in contact with the bottle head 101.

The annular base portion 31 of the insert has a substantially cylindrical portion 38, whose outer diameter corresponds approximately to the inner diameter of the sleeve 20 when the latter is received in the bore 11 of the housing 10. A radially projecting flange 39 is arranged at the end of the base portion 31 facing away from the fingers 32. When the insert is introduced in housing 10 and the sleeve 20 the cylindrical portion 38 of the base portion abuts against the inside of the sleeve 20, at one end of the sleeve. At the same time the flange 39 abuts against the corresponding end surface of the fold-over collar 22 of the sleeve 20. The flange 39 thus prevents, in a simple and effective manner, the insert 30 from being pulled downwards relative to the sleeve by the downwardly acting force that is generated by the weight of a retained bottle and the retention force occurring between the insert 30 and the bottle head 101. Additionally, the upper planar end surface of the base portion 31 is supportingly bears against a corresponding planar annular supporting lower end surface of the clamping ring 41. By this means the insert is securely prevented from pivoting around any axis which is perpendicular to the axial direction of the bottle gripper. This in turn maintains also heavy and tall bottles in a vertical direction even if they are subjected to high movements speeds and great accelerations and retardations.

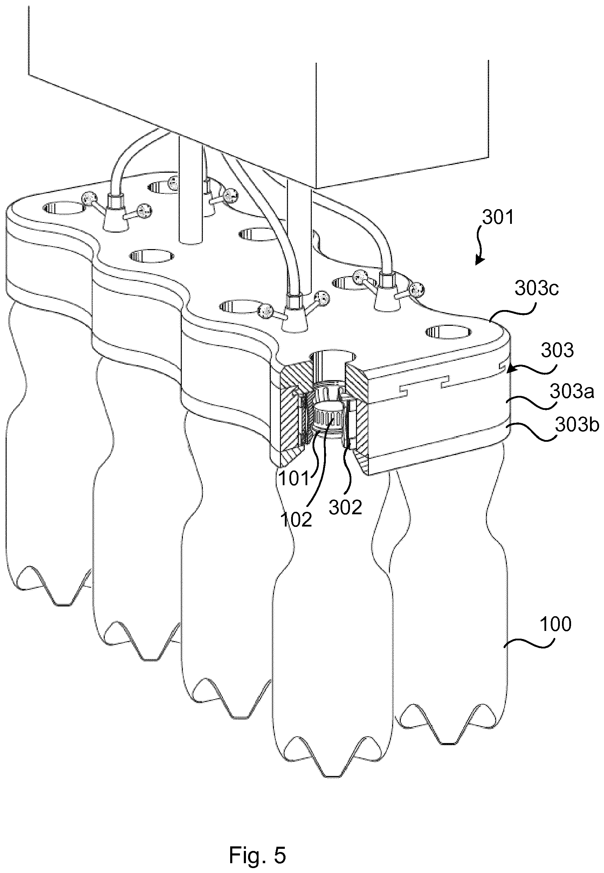

In the embodiment shown in figs. 5-7b, the bottle gripper holder 30 1 comprises a single block 303 which exhibits 8 through openings for receiving a respective bottle gripper 302. The block 303 comprises a base 303a, a bottom 303b and a cover 303c. The bottom 303b is secured by screws (not shown to the base. The cover 303c is attached to the base 303a by means of a dove tail arrangement. By this means the cover 303c may be slidably attached to and removed from the base 303a. This facilitates mounting and removal of the bottle grippers 302 which may easily be inserted and withdrawn from the openings arranged in the base 303a when the cover 303c has been removed. The bottle gripper holder 301 and the bottle gripper 302 are arranged for gripping and handling 8 bottles 100. Just as in figs. 1 and 2a, 2b and 4, the bottles 100 are standardized PET bottles able to contain 1,5 litres of liquid and having bottle heads comprising a screw cap 101 and a bottle collar 102 with standardized shapes and dimensions.

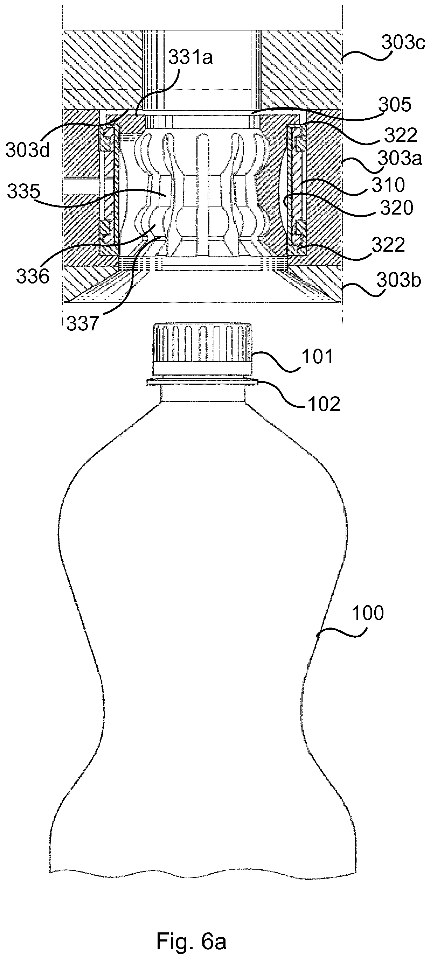

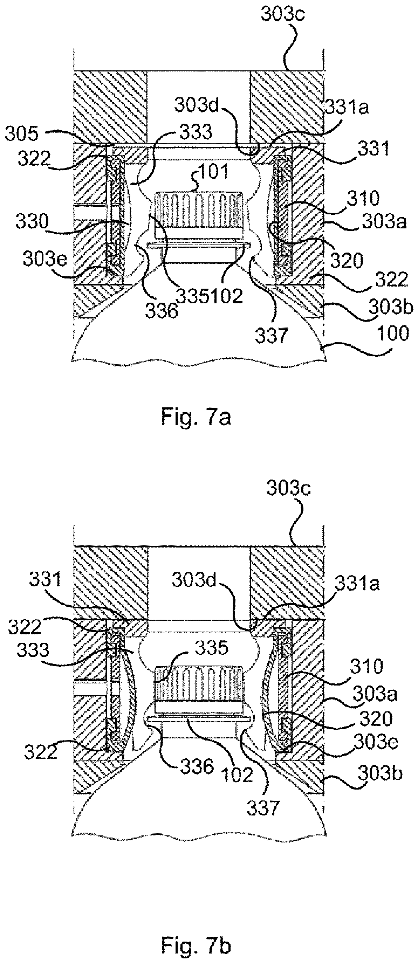

The bottle gripper 302 shown in figs. 5-7b is identical to the gripper shown in figs. 1-4. However, the arrangement of the bottle gripper in the holder 30 1 is somewhat different. Figs. 6a and 7a illustrate the bottle gripper 302 when it assumes a non pressurized state where the fingers 333 are relaxed. In this state an axial play 305 is arranged between an upper planar surface 331a of the inserts 330 base portion 331 and a corresponding planar support surface 303d which is arranged on the lower surface of the block's 303 cover 303c. By this means the bottle gripper 302 comprising the housing 310 and the insert 330 may be somewhat axially displaced between the bottom 303b and the cover 303c of the block 303.

In the non pressurized state the lower fold over collar 322 of the sleeve 320 rests about an annular lower support wall of the base 303a. It is also possible however that the opening through the base is completely cylindrical and that the opening through the bottom is somewhat smaller than the opening through the base, such that an annular supporting surface is arranged on the upper surface of the bottom around the lower mouth of the cylindrical opening through the base. In such a case the fold over collar 322 rests on said annular support surface of the bottom.

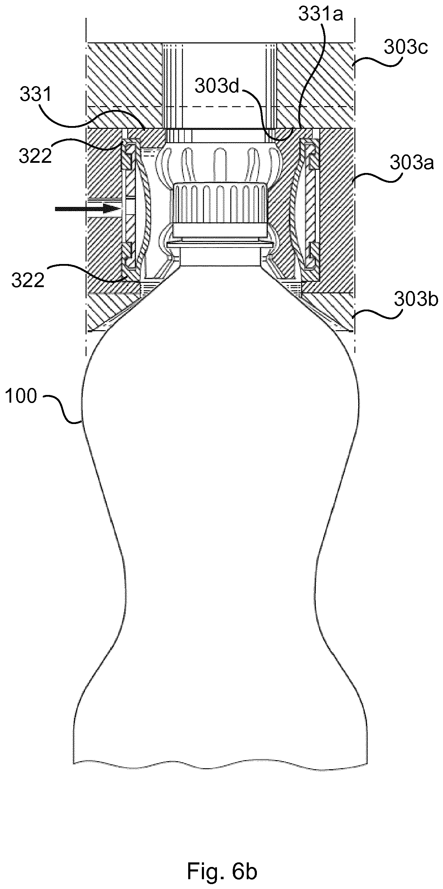

During pressurization of the bottle gripper 302, the elastic sleeve 320, just as described above, will be deformed radially inwardly such that the fingers 333 are flexing inwardly. In addition to this the pressurized fluid will also penetrate in between the fold over collar 322 and the lower end surface of the housing 310. This will cause the fold-over collar to flexibly deform somewhat in the axial direction of the bottle gripper. The same effect also takes place at the upper end of the bottle gripper 302 such that the upper fold over collar is flexibly extended somewhat in the axial direction. The effect of this axial de- formation of the fold-over collars 322 is twofold. On the one hand, the entire bottle gripper 302 will be displaced somewhat axially upwardly in relation to the block 303. On the other hand, since the annular flange of the insert's 330 base portion 331 rests on the upper fold-over collar 322, the base portion 331 and the entire insert 330 will be displaced somewhat axially upwards in relation both to the housing 310 and the block 303. The total effect of these axial displacements is that the base portion 331 of the insert will be pressed axially upwards such that the upper planar surface 331a of the base portion 331 is securely pressed against the corresponding planar support surface 303d of the block's cover 303c. Figs. 6b and 7b illustrate the pressurized state and clearly shows that the upper planar support surface 331a of the insert is pressed against the lower planar support surface 303d of the cover 303c, such that the is no play between the insert 330 and the cover 303c. By this means the insert is securely prevented from pivoting about any axis which is perpendicular to the axial direction of the bottle gripper 302 when the bottle gripper is pressurized for gripping a bottle.

In fig. 7a it is illustrated that the fingers 333 of the insert 330, in the non- pressurized relaxed state, are arranged such that the bottle contact surfaces 335 define an inner conical shape which tapers upwardly, towards the base portion 331. From fig. 7b it can be seen that, in the pressurized state, when the fingers are flexed radially inwardly, the bottle contact surfaces define a cylindrical shape, which fully corresponds to the outer cylindrical shape of the standardized screw cap 101 of the bottle being gripped. By this means it is assured that, in the relaxed state, the bottle head may easily be inserted in the bottle gripper and in the pressurized activated state, the screw cap 101 is securely gripped over its entire axial length of its outer cylindrical surface.

Fig. 7b further clearly illustrates that the bottle collar portions 336 of the fingers 333 are arranged such that the bottle collar 102, in the pressurized active state is received in the bottle collar portions 336 without any part of the bottle collar portions 336 coming into contact with the bottle collar 102. Hence, during gripping of the screw cap 101, all of the griping force applied to the fingers 333 by the pressurized fluid will be transferred to the contact between the bottle contact surfaces 335 and the screw cap 101. Hereby a secure gripping is achieved. However, if the grip between the bottle contact surfaces 335 and the screw cap 101 for any reason still would fail, the lower portion of the bottle collar portions 336 which project radially inwardly below the bottle collar 102, will prevent the bottle 100 from falling down from the bottle gripper 302.

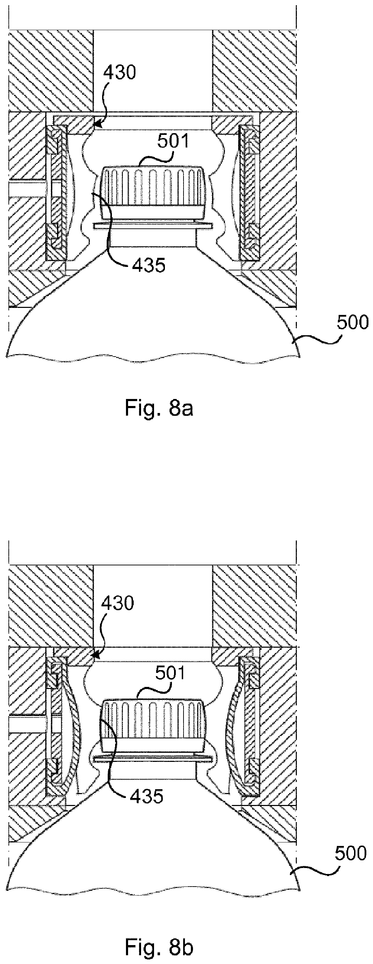

Fig. 8a-9b illustrate an embodiment of the bottle gripper where the bottle contact surfaces 435 are formed concavely along the axial length of the insert 430. In figs. 8a and 8b the bottle gripper is used for gripping a bottle 500 which is provided with a screw cap 501 having an outer circumferential surface which is convex along the axial height of the cap. Fig. 8a illustrates the screw cap 501 inserted in the gripper when the gripper is in a non-pressurized relaxed state. Fig. 8b illustrates the same bottle 500 and gripper when the griper has been pressurized for gripping the screw cap 501. As clearly seen from fig. 8b the bottle contact surfaces of the fingers contact the circumferential surface of the screw cap along essentially the entire axial height of the bottle contact surfaces 435. By this means a firm, reliable and secure grip is achieved also for bottles provided with such convex screw caps.

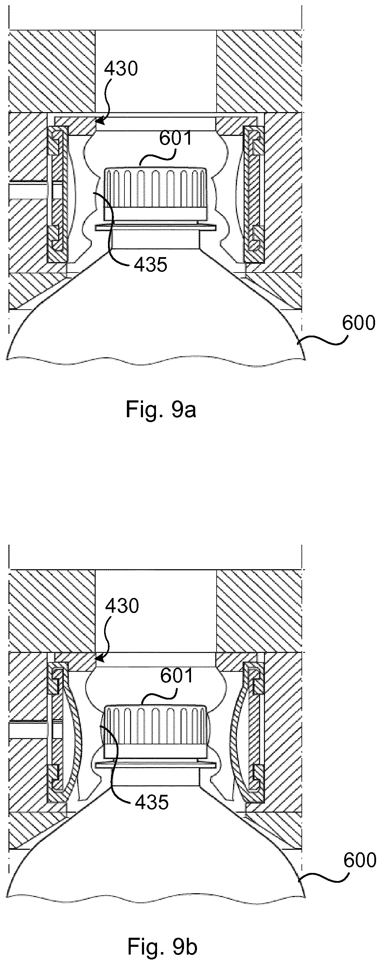

In figs. 9a and 9b, the same gripper as in figs. 8a and 8b is used for gripping a bottle 600, provided with a screw cap 601 having a generally cylindrical circumferential surface. As seen in fig. 9b, the axially concave shape of the bottle contact surfaces 435 results in that the contact between each bottle contact surface 435 is divided into an upper contact region and a lower contact region. By this means the two contact regions of each bottle contact surface 435 is arranged as far as possible away from each other in the axial direction of the insert 430. This in turn entails for that the grip between the bottle gripper and the screw cap also for such cylindrically shaped screw caps will be able to withstand high torques about the axes which are perpendicular to the axial direction of the insert, i.e. torques about any horizontal axis. Hereby, also bottles provided with cylindrical screw caps may be handled at high speeds involving heavy accelerations and retardations.

In addition to that the bottle contact surfaces may be concave along the axial direction of the insert they are also preferably curved in the circumferential direction of the insert, with a radius of curvature that corresponds to the circumferential curvature of the standardized screw cap.

Exemplifying embodiments of the invention have been described above. The invention is not limited to said embodiment but can be modified in various ways within the scope of the claims. By bottle head is in the present description meant an end portion of a bottle arranged at an end of the bottle situated opposite the bottle bottom. In the example shown, the bottle gripper is designed to enable the bottle contact surfaces 35 of the fingers 32 to engage in a retaining manner with a screw cap 103 that is screwed onto the bottle head 101 and forms part of the bottle head 101. However, it is also possible for the bottle gripper to be designed to enable the bottle contact surfaces, for example when no cap is provided, to engage in a retaining manner with another portion of the bottle head, such as a threaded portion onto which a cap is to be screwed. In the example described, all the fingers of the insert are provided with sleeve contact surfaces, bottle contact surfaces and bottle collar portions with securing portions. However, it is also possible to provide only certain of the fingers with such contact surfaces and portions. The number of bottle contact surfaces should, however, not be less than three in order to ensure a stable, strong and safe retention of the bottle head. In the example shown, the insert 30 comprises twelve fingers. However, it is also possible to provide an insert with fewer or more fingers. In the case of the bottles that are commonly available on the market with volumes of 0,5, 1,0, 1,5 and 2,0 litres it has proved particularly advantageous to provide the insert with 6, 8, 10 or 12 fingers. However, in certain applications it can be advantageous to provide the insert with an odd number of fingers.

## Claims

1. A bottle gripper comprising a substantially cylindrical housing (10, 310) and an elastic sleeve (20, 320) and an insert (30, 330, 430), wherein the elastic sleeve (20, 320) has a cylindrical portion in its non-deformed state and wherein the elastic sleeve (20, 320) is arranged in the housing and adapted to be deformed radially inwards when introducing a pressure fluid into a circular space radially outside the sleeve (20, 320), wherein the circular space is formed between a circular bore (11) of the housing (10) and the portion of the sleeve (20, 320) in its deformed state; wherein the insert (30, 330, 430) is positioned in the housing (10 , 310) and the sleeve (20, 320), which insert comprises an annular base portion (31, 331) and a number of fingers (32, 333) which extend axially from the base portion and are radially flexible, wherein each of at least three of said fingers (32, 333) comprises a radially external sleeve contact surface (33) for contacting with the sleeve (20, 320) and a radially internal bottle contact surface (35, 335, 435) for contacting with a bottle head (101, 501, 601) received in the housing (10, 310), wherein the bottle gripper is designed for gripping solely a screw cap (101, 501, 601) of said bottle head, wherein the screw cap (101, 501, 601) is gripped by transferring all of the gripping force applied to the fingers (32, 333) by the pressurized fluid to the contact between the bottle contact surfaces (35, 335, 435) and the screw cap (101, 501, 601), and wherein the bottle contact surfaces (35, 335, 435) are arranged axially overlapping the sleeve contact surfaces (33).

2. A bottle gripper according to claim 1, wherein the bottle contact surfaces (35, 335, 435) define a minimum inner diameter of the insert (30, 330, 430).

3. A bottle gripper according to claim 1 or 2, wherein bottle collar portions (36, 336) of fingers (32, 333) comprise a radially inwardly extending securing portion (37, 337) which is adapted to extend radially within the radial circumference of a bottle collar (102) when the bottle contact surfaces (35, 335, 435) are in contact with the bottle head (101, 501, 601).

4. A bottle gripper according to any of claims 1-3, wherein the bottle collar portions (36, 336) are arranged to receive a bottle collar (102) without contacting said bottle collar.

5. A bottle gripper according to any one of claims 1-4, wherein each of the sleeve contact surfaces (33) is bulging radially inwards.

6. A bottle gripper according to any one of claims 1-5, wherein the annular base portion (31, 331) has a cylindrical portion (38) for inserting into the housing (10, 310) and the sleeve (20, 320) as well as a flange (39) which protrudes radially from the cylindrical portion.

7. A bottle gripper according to any one of claims 1-6, wherein the insert (30, 330, 430) is made of a relatively rigid and resilient material.

8. A bottle gripper according to claim 7, wherein the insert (30, 330, 430) is made from polyester or POM.

9. A bottle gripper according to any one of claims 1-8, wherein the fingers (32, 333) are arranged such that the bottle contact surfaces (35, 335) define a conical shape tapering towards the base portion (31, 331) when the fingers are relaxed.

10. A bottle gripper according to any one of claims 1-9, wherein the base portion (31, 331) comprises a planar end surface (331a) which is arranged to be supported by a corresponding planar surface of a bottle gripper holder (1, 301), when the bottle contact surfaces (35, 335, 435) are contacting a bottle head (101, 501, 601).

11. A bottle gripper according to any one of claims 1-10, wherein the bottle contact surfaces (35, 335, 435) are arranged to grip the outer circumferential surface of a standardized screw cap of a 0,5, 1,5, 2,0 or 2,5 liter PET bottle.

12. Bottle gripper holder (1, 301) comprising at least one block (3, 303) and at least bottle gripper (2, 302) according to any of claims 1-11, received in a respective opening of said block.

13. Bottle gripper holder (301) according to claim 12, wherein the base portion (331) comprises a planar end surface (331a) which is supported by a corresponding planar surface of the bottle gripper holder at least when a pressurized fluid has been introduced into the space between the housing (310) and the sleeve (320).

14. Bottle gripper holder according to claim 13, wherein the bottle gripper (302) is received in the respective opening of the block (303) with an axial play, and wherein the insert (330) is arranged for axial displacement such that the planar end surface (331a) of the base portion (331) is pressed against the corresponding planar surface of the bottle gripper holder when a pressurized fluid is introduced into the space between the housing (310) and the sleeve (320).

## Patentansprüche

1. Flaschengreifer, ein im Wesentlichen zylinderförmiges Gehäuse (10, 310) und eine elastische Hülse (20, 320) und einen Einsatz (30, 330, 430) umfassend, wobei die elastische Hülse (20, 320) in ihrem nicht verformten Zustand einen zylinderförmigen Abschnitt aufweist und wobei die elastische Hülse (20, 320) in dem Gehäuse angeordnet und dafür eingerichtet ist, radial einwärts verformt zu werden, wenn ein Druckfluid in einen runden Raum radial außerhalb der Hülse (20, 320) eingeführt wird, wobei der runde Rum zwischen einer runden Bohrung (11) des Gehäuses (10) und dem Abschnitt der Hülse (20, 320) im verformten Zustand gebildet ist, wobei der Einsatz (30, 330, 430) in dem Gehäuse (10, 310) und der Hülse (20, 320) positioniert ist, wobei der Einsatz einen ringförmigen Basisabschnitt (31, 331) und eine Anzahl an Fingern (32, 333) umfasst, die sich axial vom Basisabschnitt aus erstrecken und radial flexibel sind, wobei jeder von mindestens drei Fingern (32, 333) eine radial äußere Hülsenkontaktfläche (33) für den Kontakt mit der Hülse (20, 320) und eine radial innere Flaschenkontaktfläche (35, 335, 435) für den Kontakt mit einem in dem Gehäuse (10, 310) aufgenommenen Flaschenkopf (101, 501, 601) umfasst, wobei der Flaschengreifer dafür gestaltet ist, lediglich eine Schraubkappe (101, 501, 601) des Flaschenkopfs zu ergreifen, wobei die Schraubkappe (101, 501, 601) ergriffen wird, indem die gesamte an den Fingern (32, 333) anliegende Greifkraft durch das mit Druck beaufschlagte Fluid auf den Kontakt zwischen den Flaschenkontaktflächen (35, 335, 435) und der Schraubkappe (101, 501, 601) übertragen wird, und wobei die Flaschenkontaktflächen (35, 335, 435) die Hülsenkontaktflächen (33) axial überlagernd angeordnet sind.

2. Flaschengreifer nach Anspruch 1, wobei die Flaschenkontaktflächen (35, 335, 435) einen minimalen Innendurchmesser des Einsatzes (30, 330, 430) definieren.

3. Flaschengreifer nach Anspruch 1 oder 2, wobei Flaschenkranzabschnitte (36, 336) der Finger (32, 333) einen sich radial einwärts erstreckenden Sicherungsabschnitt (37, 337) umfassen, der dafür eingerichtet ist, sich radial in den radialen Umfang eines Flaschenkranzes (102) zu erstrecken, wenn die Flaschenkontaktflächen (35, 335, 435) in Kontakt mit dem Flaschenkopf (101, 501, 601) stehen.

4. Flaschengreifer nach einem der Ansprüche 1 bis 3, wobei die Flaschenkranzabschnitte (36, 336) dafür angeordnet sind, einen Flaschenkranz (102) aufzunehmen, ohne mit dem Flaschenkranz in Kontakt zu gelangen.

5. Flaschengreifer nach einem der Ansprüche 1 bis 4, wobei sich jede der Hülsenkontaktflächen (33) radial einwärts wölbt.

6. Flaschengreifer nach einem der Ansprüche 1 bis 5, wobei der ringförmige Basisabschnitt (31, 331) einen zylinderförmigen Abschnitt (38) zum Einsetzen in das Gehäuse (10, 310) und die Hülse (20, 320) sowie einen Flansch (39) aufweist, der radial aus dem zylinderförmigen Abschnitt hervorsteht.

7. Flaschengreifer nach einem der Ansprüche 1 bis 6, wobei der Einsatz (30, 330, 430) aus einem relativ starren und nachgiebigen Material besteht.

8. Flaschengreifer nach Anspruch 7, wobei der Einsatz (30, 330, 430) aus Polyester oder POM besteht.

9. Flaschengreifer nach einem der Ansprüche 1 bis 8, wobei die Finger (32, 333) derart angeordnet sind, dass die Flaschenkontaktflächen (35, 335) eine konische Form definieren, die sich hin zum Basisabschnitt (31, 331) verjüngt, wenn die Finger entspannt sind.

10. Flaschengreifer nach einem der Ansprüche 1 bis 9, wobei der Basisabschnitt (31, 331) eine ebene Endfläche (331a) umfasst, die dafür angeordnet ist, von einer entsprechenden ebenen Fläche eines Flaschengreiferhalters (1, 301) gestützt zu werden, wenn die Flaschenkontaktflächen (35, 335, 435) mit einem Flaschenkopf (101, 501, 601) in Kontakt stehen.

11. Flaschengreifer nach einem der Ansprüche 1 bis 10, wobei die Flaschenkontaktflächen (35, 335, 435) dafür angeordnet sind, die Außenumfangsfläche einer standardisierten Schraubkappe einer 0,5-, 1,5-, 2,0- oder 2,5-Liter-PET-Flasche zu ergreifen.

12. Flaschengreiferhalter (1, 301), mindestens einen Block (3, 303) und mindestens einen Flaschengreifer (2, 302) nach einem der Ansprüche 1 bis 11 umfassend, der in einer entsprechenden Öffnung des Blocks aufgenommen ist.

13. Flaschengreiferhalter (301) nach Anspruch 12, wobei der Basisabschnitt (331) eine ebene Endfläche (331a) umfasst, die von einer entsprechenden ebenen Fläche des Flaschengreiferhalters zumindest dann gestützt wird, wenn ein mit Druck beaufschlagtes Fluid in den Raum zwischen dem Gehäuse (310) und der Hülse (320) eingeführt ist.

14. Flaschengreiferhalter nach Anspruch 13, wobei der Flaschengreifer (302) mit einem axialen Spiel in der entsprechenden Öffnung des Blocks (303) aufgenommen ist und wobei der Einsatz (330) derart für eine axiale Verlagerung angeordnet ist, dass die ebene Endfläche (331a) des Basisabschnitts (331) gegen die entsprechende ebene Fläche des Flaschengreiferhalters gepresst wird, wenn ein mit Druck beaufschlagtes Fluid in den Raum zwischen dem Gehäuse (310) und der Hülse (320) eingeführt ist.

## Revendications

1. Préhenseur de bouteille comprenant un logement essentiellement cylindrique (10, 310) et un manchon élastique (20, 320) et un insert (30, 330, 430), dans lequel le manchon élastique (20, 320) a une partie cylindrique dans son état non déformé et dans lequel le manchon élastique (20, 320) est agencé dans le logement et adapté pour être déformé radialement vers l'intérieur lors de l'introduction d'un fluide sous pression dans un espace circulaire radialement hors du manchon (20, 320), dans lequel l'espace circulaire est formé entre un alésage circulaire (11) du logement (10) et la partie du manchon (20, 320) dans son état déformé ; dans lequel l'insert (30, 330, 430) est positionné dans le logement (10, 310) et le manchon (20, 320), lequel insert comprend une partie de base annulaire (31, 331) et un nombre de doigts (32, 333) qui s'étendent axialement de la partie de base et sont flexibles radialement, dans lequel chacun d'au moins trois desdits doigts (32, 333) comprend une surface de contact de manchon (33) radialement extérieure pour la mise en contact avec le manchon (20, 320) et une surface de contact de bouteille (35, 335, 435) radialement intérieure pour la mise en contact avec une tête de bouteille (101, 501, 601) reçue dans le logement (10, 310), dans lequel le préhenseur de bouteille est conçu pour prendre uniquement un bouchon fileté (101, 501, 601) de ladite tête de bouteille, dans lequel le bouchon fileté (101, 501, 601) est pris en transférant toute la force de préhension appliquée sur les doigts (32, 333) par le fluide sous pression au contact entre les surfaces de contact de bouteille (35, 335, 435) et le bouchon fileté (101, 501, 601), et dans lequel les surfaces de contact de bouteille (35, 335, 435) sont agencées en chevauchant axialement les surfaces de contact de manchon (33).

2. Préhenseur de bouteille selon la revendication 1, dans lequel les surfaces de contact de bouteille (35, 335, 435) définissent un diamètre intérieur minimal de l'insert (30, 330, 430).

3. Préhenseur de bouteille selon la revendication 1 ou 2, dans lequel des parties de goulot de bouteille (36, 336) de doigts (32, 333) comprennent une partie de fixation (37, 337) s'étendant radialement vers l'intérieur qui est adaptée pour s'étendre radialement à l'intérieur de la circonférence radiale d'un goulot de bouteille (102) lorsque les surfaces de contact de bouteille (35, 335, 435) sont en contact avec la tête de bouteille (101, 501, 601).

4. Préhenseur de bouteille selon l'une quelconque des revendications 1 - 3, dans lequel les parties de goulot de bouteille (36, 336) sont agencées pour recevoir un goulot de bouteille (102) sans être en contact avec ledit goulot de bouteille.

5. Préhenseur de bouteille selon l'une quelconque des revendications 1 - 4, dans lequel chacune des surfaces de contact de manchon (33) est en saillie radialement vers l'intérieur.

6. Préhenseur de bouteille selon l'une quelconque des revendications 1 - 5, dans lequel la partie de base annulaire (31, 331) a une partie cylindrique (38) pour l'insertion dans le logement (10, 310) et le manchon (20, 320) ainsi qu'une bride (39) qui fait saillie radialement depuis la partie cylindrique.

7. Préhenseur de bouteille selon l'une quelconque des revendications 1 - 6, dans lequel l'insert (30, 330, 430) est fait d'un matériau relativement rigide et résilient.

8. Préhenseur de bouteille selon la revendication 7, dans lequel l'insert (30, 330, 430) est fait de polyester ou de POM.

9. Préhenseur de bouteille selon l'une quelconque des revendications 1 - 8, dans lequel les doigts (32, 333) sont agencés de telle façon que les surfaces de contact de bouteille (35, 335) définissent une forme conique décroissante en direction de la partie de base (31, 331) lorsque les doigts sont relâchés.

10. Préhenseur de bouteille selon l'une quelconque des revendications 1 - 9, dans lequel la partie de base (31, 331) comprend une surface d'extrémité planaire (331a) qui est agencée pour être supportée par une surface planaire correspondante d'un support de préhenseur de bouteille (1, 301) lorsque les surfaces de contact de bouteille (35, 335, 435) sont en contact avec une tête de bouteille (101, 501, 601).

11. Préhenseur de bouteille selon l'une quelconque des revendications 1 - 10, dans lequel les surfaces de contact de bouteille (35, 335, 435) sont agencées pour prendre la surface circonférentielle extérieure d'un bouchon fileté normalisé d'une bouteille en PET de 0,5, 1,5, 2,0 ou 2,5 litres.

12. Support de préhenseur de bouteille (1, 301) comprenant au moins un bloc (3, 303) et au moins un préhenseur de bouteille (2, 302) selon l'une quelconque des revendications 1 - 11, reçu dans une ouverture respective dudit bloc.

13. Support de préhenseur de bouteille (301) selon la revendication 12, dans lequel la partie de base (331) comprend une surface d'extrémité planaire (331a) qui est supportée par une surface planaire correspondante du support de préhenseur de bouteille au moins lorsqu'un fluide pressurisé a été introduit dans l'espace entre le logement (310) et le manchon (320).

14. Support de préhenseur de bouteille selon la revendication 13, dans lequel le préhenseur de bouteille (302) est reçu dans l'ouverture respective du bloc (303) avec un jeu axial, et dans lequel l'insert (330) est agencé pour le déplacement axial de telle façon que la surface d'extrémité planaire (331a) de la partie de base (331) est appuyée contre la surface planaire correspondante du support de préhenseur de bouteille lorsqu'un fluide sous pression est introduit dans l'espace entre le logement (310) et le manchon (320).
